# EUROPÄISCHE PATENTANMELDUNG

(11) **EP 2 083 505 A1**
(43) Veröffentlichungstag der Anmeldung: **29.07.2009**
(21) Anmeldenummer: 07024857.0
(22) Anmeldetag: 28.01.2008
(51) Int. Cl.: H02K 3/52

(54) **Dynamoelektrische Maschine mit auf Spulenkörpern angeordneten Zahnspulen**

(71) Anmelder: SIEMENS AKTIENGESELLSCHAFT, 80333 München (DE)
(72) Erfinder: Eckert, Rainer, 97616 Bad Neustadt/Herschfeld (DE); Grossmann, Udo, 97640 Oberstreu (DE); Pawellek, Jürgen, 97618 Unsleben (DE); Streit, Dietmar, 97640 Oberstreu (DE)

(57) **Zusammenfassung**

Die Erfindung betrifft eine elektrische Maschine mit einem Stator (1), der ein in Nuten angeordnetes Wicklungssystem aufweist, wobei zwischen den Nuten Zähne (2) angeordnet sind, und zumindest ein Teil dieser Zähne (2) von jeweils einer Zahnspule (9) umgeben ist, wobei die Zähne (2) durch einen Jochrücken (3) miteinander zur Führung des magnetischen Flusses verbunden sind, einen Rotor (14), insbesondere in der Statorbohrung (12) angeordnet, der über einen Luftspalt (11) zwischen Stator (1) und Rotor (14) mit dem Stator (1) elektromagnetisch wechselwirkt, so dass sich eine Rotationsbewegung einstellt, wobei jede Zahnspule (9) einen Spulenkörper (4) umgibt, der einen den Zahn (2) umfassenden Schaft (5) und zwei flanschähnliche Deckel (6,7) aufweist, wobei ein Deckel (6) dem Jochrücken (3) und der andere Deckel (7) dem Luftspalt (11) zugewandt ist, wobei die flanschähnlichen Deckel (6,7) flexibel ausgeführt sind, derart, dass sie an die Statorbohrung (12) und/oder den Jochrücken (3) anpassbar sind.

## Beschreibung

Die Erfindung betrifft eine dynamoelektrische Maschine mit einem Stator, der ein in Nuten angeordnetes Wicklungssystem aufweist, wobei zwischen den Nuten Zähne angeordnet sind, und zumindest ein Teil dieser Zähne von jeweils einer Zahnspule umgeben ist, wobei die Zähne durch einen Jochrücken miteinander zur Führung des magnetischen Flusses verbunden sind, einen Rotor, insbesondere in der Statorbohrung angeordnet, der über einen Luftspalt zwischen Stator und Rotor mit dem Stator elektromagnetisch wechselwirkt, so dass sich eine Rotationsbewegung einstellt, wobei jede Zahnspule einen Spulenkörper umgibt, der einen den Zahn umfassenden Schaft und zwei flanschähnliche Deckel aufweist.

Dynamoelektrische Maschinen sind grundsätzlich mit einem Wicklungssystem versehen, das sich normalerweise in Nuten eines Stators befindet. Das Wicklungssystem ist aus fertigungstechnischen Gründen bei einigen dynamoelektrischen Maschinen aus Zahnspulen aufgebaut, die sich zwecks leichter Handhabung, Fertigung und Montage auf Spulenkörpern befinden.

Diese Spulenkörper werden, wie beispielsweise aus der DE 199 61 339 A1 bekannt, auf ein Sternpaket gesetzt und dann in einen Jochrücken eingeschoben. Diese Spulenkörper weisen einen Schaft und an seinen Enden im Wesentlichen parallele flanschähnliche Deckel auf, die rechtwinklig zum Schaft angeordnet sind. Besonders bei dynamoelektrischen Maschinen kleinen Durchmessers mit geringer Nutenanzahl wird dadurch Nutfüllfaktor reduziert bzw. die Blechdicke des Jochrückens unnötig geschwächt. Der Jochrücken dient zur Führung des magnetischen Flusses und darf insofern radial nicht zu dünn ausgeführt werden, um nicht in Sättigung zu gelangen.

Um einen hoch ausgenützten Motor zu schaffen, ist beispielsweise aus der DE 10 2004 058 046 A1 eine hochpolige permanenterregte Synchronmaschine mit Zahnspulen bekannt, wobei, um eine hohe Ausnutzung zu erzielen, die Zahnspulen lediglich ohne Spulenkörper eingesetzt werden können. Dies erfordert normalerweise zusätzlichen Isolationsaufwand zwischen Zahnspule und den benachbarten Zähnen bzw. Jochrücken, was wiederum den Montageaufwand erhöht.

Ausgehend davon liegt der Erfindung die Aufgabe zugrunde, eine dynamoelektrische Maschine, insbesondere eine hochpolige permanenterregte Synchronmaschine mit hohem Ausnutzungsgrad bei geringem Montageaufwand zu schaffen.

Die Lösung der gestellten Aufgabe gelingt durch eine dynamoelektrische Maschine mit einem Stator, der ein in Nuten angeordnetes Wicklungssystem aufweist, wobei zwischen den Nuten Zähne angeordnet sind, und zumindest ein Teil dieser Zähne von jeweils einer Zahnspule umgeben ist, wobei die Zähne durch einen Jochrücken miteinander zur Führung des magnetischen Flusses verbunden sind, einen Rotor, insbesondere in der Statorbohrung angeordnet, der über einen Luftspalt zwischen Stator und Rotor mit dem Stator elektromagnetisch wechselwirkt, so dass sich eine Rotationsbewegung einstellt, wobei jede Zahnspule einen Spulenkörper umgibt, der einen den Zahn umfassenden Schaft und zwei flanschähnliche Deckel aufweist, wobei ein Deckel dem Jochrücken und der andere Deckel dem Luftspalt zugewandt ist, wobei die flanschähnlichen Deckel flexibel ausgeführt sind, derart, dass sie an die Statorbohrung und/oder den Jochrücken anpassbar sind.

Die Lösung der gestellten Aufgabe gelingt auch durch die Herstellungsverfahren einer dynamoelektrischen Maschine nach Anspruch 5:
- Stanzpaketieren von Stator und Rotor,
- insbesondere lagengerechtes Bewickeln eines Spulenkörpers durch geeignete Bewicklungsvorrichtungen, insbesondere Flyer, in dem zumindest ein flanschähnlicher Deckel aus dem Wickelraum gebogen wird und dadurch die Zugänglichkeit gewährleistet ist,
- Einsetzen des bewickelten Spulenkörpers in den Stator, so dass der Spulenkörper jeweils einen Zahn umgibt und Anpassen der flanschähnlichen Deckel an den Verlauf des Jochrückens und den Verlauf der Statorbohrung.

Die Paketierung kann durch Stanzpaketieren erfolgen, alternativ dazu können die Einzelbleche von Stator und/oder Rotor auch verschweißt oder durch Backlackverfahren oder durch Spannbolzen paketiert werden.

Die Lösung der gestellten Aufgabe gelingt auch durch die Herstellungsverfahren einer dynamoelektrischen Maschine nach Anspruch 6:
- Stanzpaketieren von Stator und Rotor,
- Bewickeln eines Teils eines zweiteiligen Spulenkörpers,
- nach dem Bewickeln des einen Teils des Spulenkörpers wird der zweite Teil mit seinem flanschähnlicher Deckel auf den bereits bewickelten Teil des Spulenkörpers gesetzt,
- Einsetzen des bewickelten zusammengesetzten Spulenkörpers in den Stator und Anpassen der flanschähnlichen Deckel an den Verlauf des Jochrückens und den Verlauf der Statorbohrung.

Die Paketierung kann durch Stanzpaketieren erfolgen, alternativ dazu können die Einzelbleche von Stator und/oder Rotor auch verschweißt oder durch Backlackverfahren oder durch Spannbolzen paketiert werden.

Durch die erfindungsgemäße Gestaltung des Spulenkörpers ist nunmehr zum einen ein lagegerechtes kompaktes Wickeln möglich, d.h. es liegt eine hohe Lagendichte der jeweiligen Drähte unabhängig vom Querschnitt der Wickeldrähte vor. Dabei können die bisherigen Wickelverfahren, z.B. Nadelwickler oder Flyer aufgrund der Zugänglichkeit des Schaftes des Spulenkörpers weiterhin verwendet werden, und es stellt sich somit ein hoher Kupferfüllfaktor der Zahnspule ein.

Nach dem Wickeln kann nunmehr in einfacher Art und Weise der Spulenkörper mit seiner Zahnspule an die geometrischen Bedingungen des Stators angepasst werden. Das heißt, durch die Scharnierwirkung bzw. Flexibilität des flanschähnlichen Deckels kann der in den Nuten zur Verfügung stehende Wickelraum maximal ausgenutzt werden. Es ergibt sich somit ein hoher Kupferfüllfaktor ein, bei gleichzeitiger Reduzierung "Leerräume" in der Nut.

Durch die flanschähnlichen Deckel erfolgt gleichzeitig eine Isolation der Wicklung zum Joch.

Die Flexibilität der flanschähnlichen Deckel zur Anpassung an den Verlauf des Jochs oder der Statorbohrung kann auch durch ein thermisches Druckverfahren während der Montage der bewickelten Spulenkörper auf den Zahn erreicht werden. Damit wird Wicklung und Spulenkörper in die nunmehr endgültige beispielsweise durch das Joch vorgegebene Form gebracht und fixiert.

Diese Spulenkörper, ob einteilig oder mehrteilig ausgeführt, eignen sich für die Montage aus Richtung Statorbohrung, also einteilige Statoren, als auch für mehrteilig ausgeführte Statoren, die ein mit Zahnspulen versehenes Sternpaket und einen Jochrücken aufweisen. Dabei wird das mit Zahnspulen versehene Sternpaket axial in einen Jochrücken eingesetzt.

Die Erfindung sowie weitere vorteilhafte Ausgestaltungen der Erfindung sind den schematisch dargestellten Ausführungsbeispielen in der Zeichnung zu entnehmen, darin zeigen:
- FIG 1: den Stand der Technik,
- FIG 2 bis 6: erfindungsgemäße Spulenkörper,
- FIG 7: dynamoelektrische Maschine mit Spulenkörper,
- FIG 8: Blechpaket,
- FIG 9: bewickeltes Blechpaket,
- FIG 10: zweigeteilter Stator,
- FIG 11: vergossene Wicklung,
- FIG 12: zweigeteilter Spulenkörper.

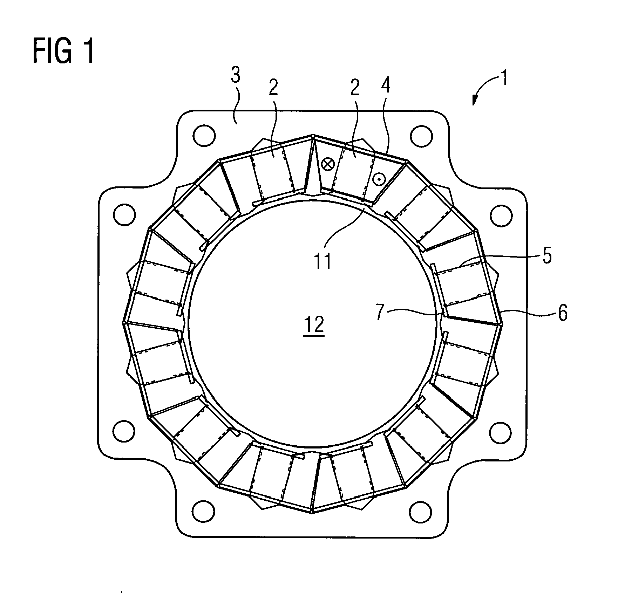

FIG 1 zeigt in einem Querschnitt eine prinzipielle Darstellung eines Stators 1, der zum Luftspalt 11 weisende Zähne 2 aufweist, wobei die Zähne 2 durch ein Jochrücken 3 elektromagnetisch verbunden sind.

Um die Zähne 2 sind Spulenkörper 4 angeordnet, auf denen sich Zahnspulen 9 befinden. Die Zahnspulen 9 werden radial flankiert durch zwei parallele senkrecht zum Schaft 5 des Spulenkörpers 4 angeordnete Deckel 6 und 7.

Durch parallele Anordnung der Deckel 6, 7 senkrecht zum Schaft 5 des Spulenkörpers 4 ergeben sich insbesondere bei dynamoelektrischen Maschinen in hochpoliger und/oder Ausführung kleiner Achshöhen Leerräume zwischen dem Deckel und dem Jochrücken 3, die den Nutfüllfaktor und damit die Ausnutzung dieser elektrischen Maschine reduzieren.

Dies gilt insbesondere für rotatorische Motoren mit relativ geringer Achshöhe, da dort eine vergleichsweise große Krümmung an der Statorbohrung und am Jochrücken also am Nutgrund auftritt, wobei diese Krümmung durch vorhandene Spulenkörper 4 nicht nachgebildet werden kann.

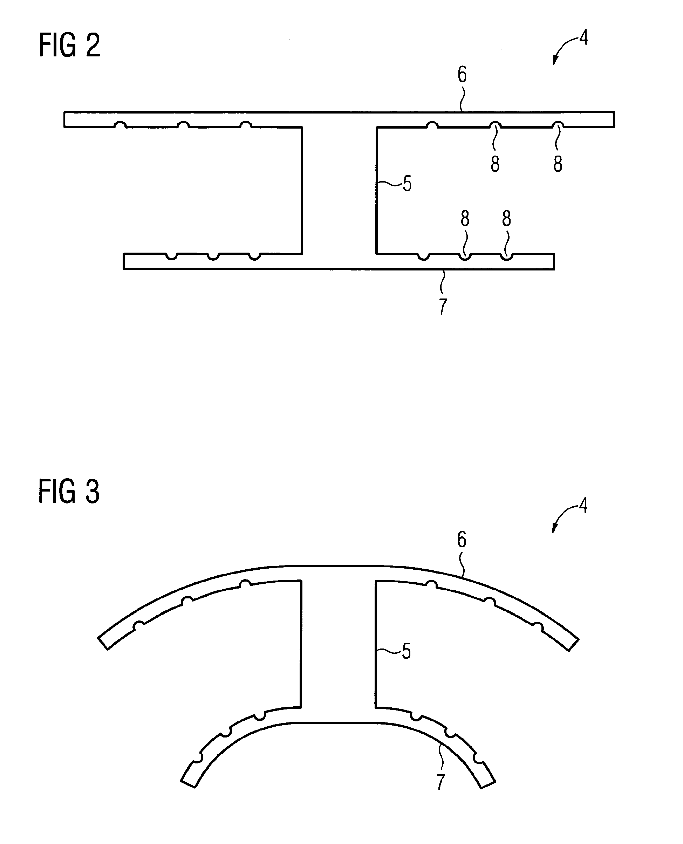

Erfindungsgemäß wird nunmehr ein Spulenkörper 4 gemäß FIG 2 eingesetzt, der ebenfalls einen Zahn 2 umgebenden Schaft 5 aufweist, wobei aber die flanschähnlichen Deckel 6 und 7 flexibel oder mit Scharnierfunktion ausgeführt sind. Diese Scharnierfunktion wird durch Ausnehmungen 8, die im Wesentlichen achsparallel in einem Deckel 6, 7 verlaufen gebildet. Damit kann auch schon während des Bewicklungsvorganges zumindest einer der flanschähnlichen Deckel 6 oder 7 vom Schaft 5 weggeklappt werden, und somit ein lagegerechter Wicklungsvorgang der Zahnspule durch allgemein bekannte Wicklungsverfahren, wie z.B. Nadelwickler in einfacher Art und Weise gewährleistet werden.

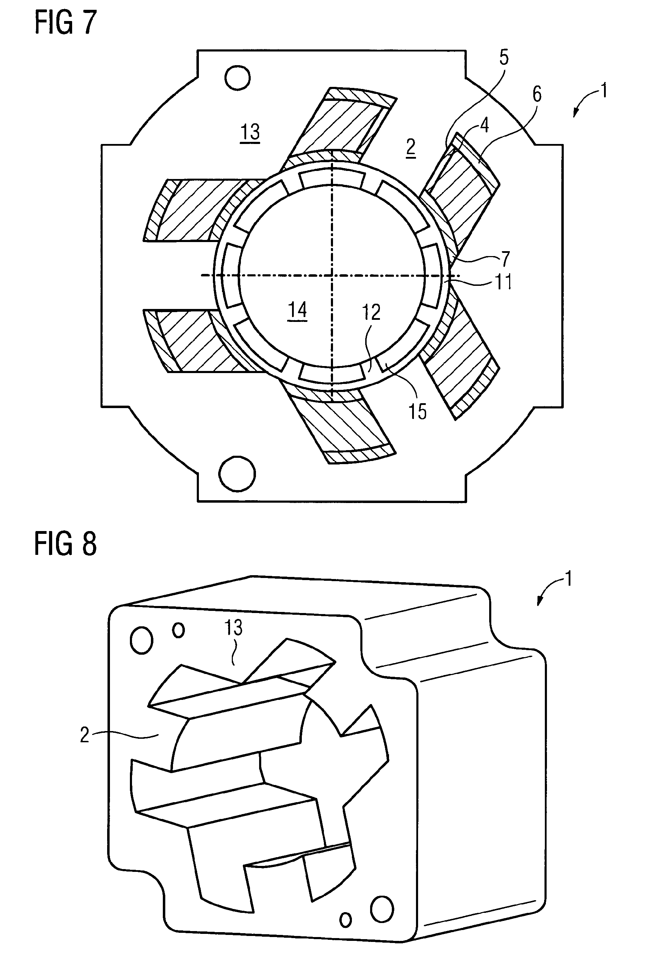

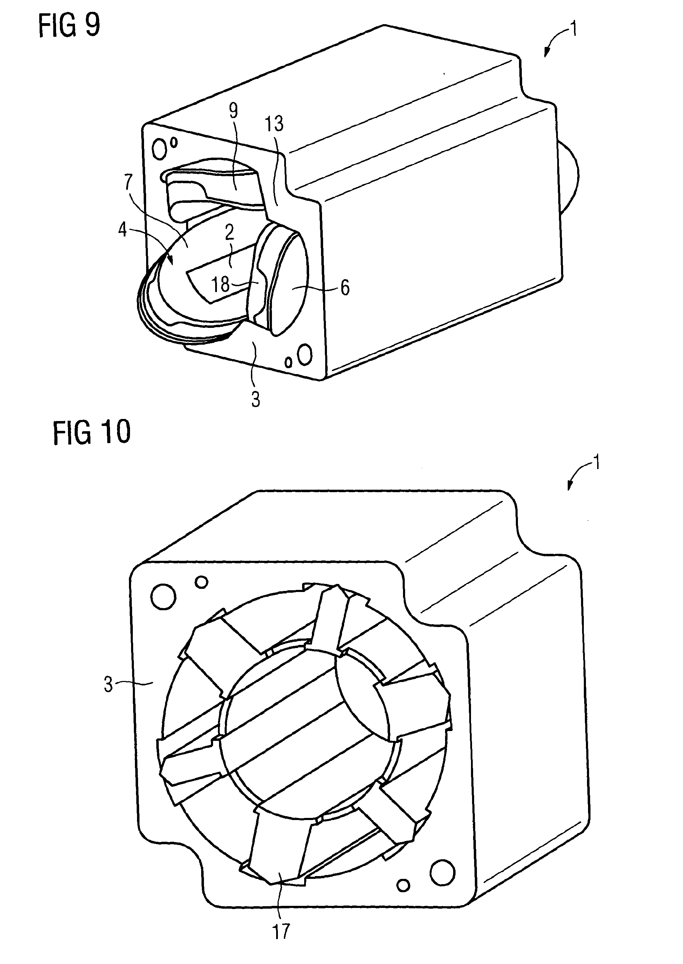

Nach Beendigung des Wicklungsvorganges wird nunmehr der bewickelte Spulenkörper 4 je nach Statorkonzept entweder von außen auf ein Sternpaket, gemäß FIG 10, oder von der Statorbohrung 12 aus, gemäß FIG 7, 8, 9, 11, auf einem Zahn 2 positioniert. Danach wird sowohl der flanschähnliche Deckel 6 in Richtung Jochrücken 3 als auch der dem Luftspalt zugewandte flanschähnliche Deckel 7 dem Verlauf des Jochrückens 3 am Nutgrund bzw. der Statorbohrung 12 angepasst.

Dabei ergeben sich gegebenenfalls gewisse vernachlässigbare Verschiebungen innerhalb der Anordnung der Windungen in der Zahnspule 9..

FIG 3 zeigt nunmehr beispielhaft in prinzipieller Darstellung wie sich die flanschähnlichen Deckel 6 und 7 in diesem Fall im eingebauten Zustand der Spulenkörper 4 im Stator 1 anpassen.

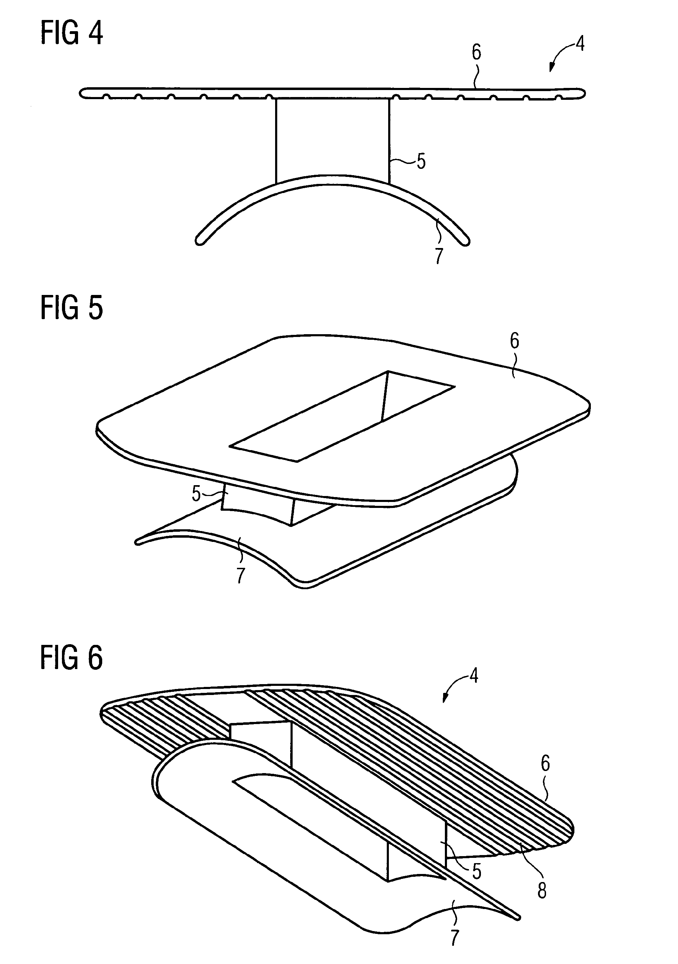

FIG 4 bis 6 zeigen weitere Ausführungsformen des Spulenkörpers 4, der an den Stirnseiten eine axiale Überlappung der Deckel 6, 7 aufweist, und so in montiertem Zustand im Stator 1 eine Isolierung der Zahnspule 9 gegenüber dem Blechpaket schafft.

Somit lässt sich insbesondere gemäß FIG 7 in einfacher Art und Weise auch bei einem Stator 1 mit nur drei Zahnspulen ein vergleichsweise hoher Nutfüllfaktor in der Nut erreichen, der eine hohe Ausnutzung der dynamoelektrischen Maschine gewährleistet.

Gleichzeitig sind keinerlei zusätzliche Isolationsmaßnahmen in Richtung Zahn 2 oder Jochrücken 3 vorzunehmen.

In einer weiteren Ausführungsform ist insbesondere der flanschähnliche Deckel 7 als Nutverschlusselement ausgebildet, der zumindest zum Teil magnetisch leitfähig ausgebildet sein kann.

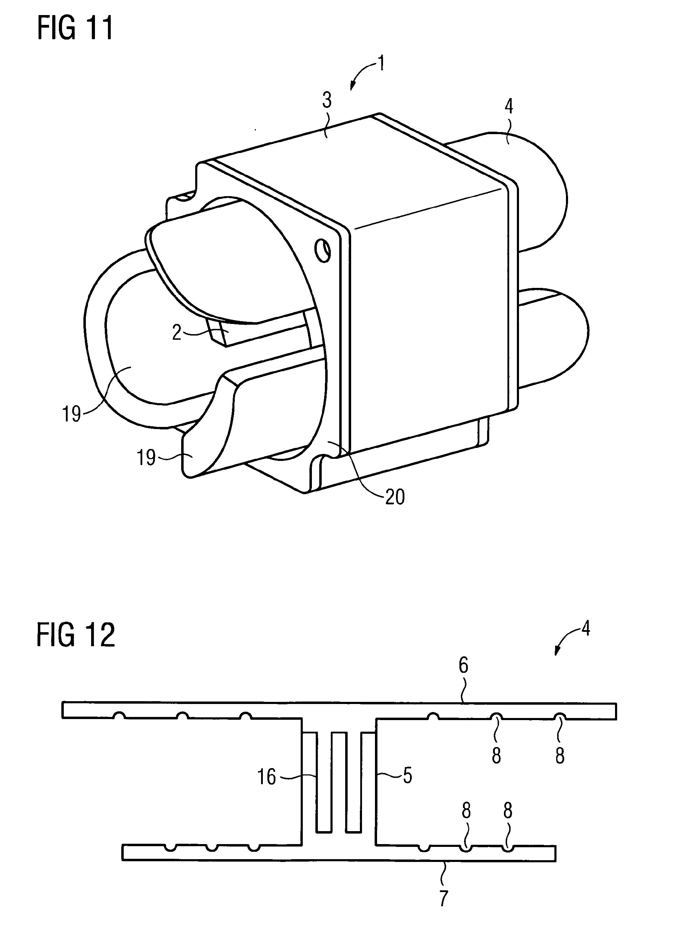

Diese Ausführungsform eignet sich insbesondere für zweigeteilte Spulenkörpern 4 gemäß FIG 12, die im Bereich ihres Schaftes 5 zusammensteckbar sind. Damit weist jeder Teil des Spulenkörpers 4 einen Abschnitt des Schaftes 5 und einen flanschähnlichen Deckel 6 oder 7 auf.

In einer weiteren Ausführungsform des Spulenkörpers 4 wird dieser zuerst mit parallel und senkrecht zum Schaft angeordneten flanschähnlichen Deckeln 6 und 7 ausgeführt und mit bekannten Wickelverfahren bewickelt. Danach wird die Wicklung mit den flanschähnlichen Deckeln des Spulenkörpers 4 thermisch unter Druck in die endgültige für den jeweiligen Stator 1 geeignete Form umgeformt. Dies kann insbesondere gleichzeitig mit einem Verguss der Zahnspule 9 mit den Spulenkörpern 4 erfolgen, so dass auch in diesem Fall eine einfache Montage und nahezu automatisierte Fertigung möglich ist.

Der erfindungsgemäße Spulenkörper 4 und das erfindungsgemäße Herstellungsverfahren eignen sich insbesondere für permanenterregte Synchronmaschinen und dabei sowohl für Synchronmaschinen mit Innenläufer als auch mit dementsprechenden einfachen Anpassungen für Außenläufer.

Die erfindungsgemäße Anordnung und das Verfahren führen neben der hohen Ausnutzung zu einer kostengünstigen Herstellung, wobei die Außenabmessungen der dynamoelektrischen Maschine aufgrund der angepassten Spulenkörper vergleichsweise gering sind, da der Jochrücken 3, insbesondere gemäß FIG 8 gleichmäßig mit einer radial durchgehenden Stärke versehen werden kann, ohne Bereiche zu aufzuweisen, die in magnetische Sättigung gehen.

Gemäß der Figur 7, 9 ist eine räumliche Trennung der Zahnspulen 9 durch einen jeweils unbewickelten Zahn 13 und somit eine elektrischen Isolation zwischen den einzelnen elektrischen Phasen geschaffen. Dabei weist der Stator 1 lediglich drei bewickelte Zähne 2 auf, die bei einem Dreiphasensystem mit den Phasen U, V, W beaufschlagt werden.

Laschen 18, insbesondere am Deckel 7 befestigt eignen sich zur Fixierung der Zahnspule 9 im Betrieb der dynamoelektrischen Maschine oder als Montagehilfe vor dem Vergießen, wobei sich ein Stator 1 nach FIG 11 ergibt.

FIG 10 zeigt einen zweigeteilten Stator 1, der ein Sternpaket 17 und einen Jochrücken 3 aufweist. Dabei werden die breiteren Zähne 2 mit Spulenkörpern 4 versehen, die jeweils eine Zahnspule 9 aufweisen. Das Sternpaket 17 ist dabei durch Bleche aufgebaut, die axial abwechselnd hintereinander angeordnet sind und zum einen Zähne aufweisen, die an ihren Zahnköpfen miteinander verbunden sind und zum anderen einzelne Zähne aufweisen. Das derart zusammengestellte Blechpaket weist geringe Streuverluste auf.

FIG 11 zeigt einen Stator 1, wobei die Spulenkörper 4 mit ihren Zahnspulen 9 auf den Zähnen 2 vergossen sind. Durch den Verguss 19 kann eine Formgestaltung erreicht werden, die beispielsweise einen Kühlluftstrom führt. Das Blechpaket des Stators 1 ist durch Endplatten 20, vorzugsweise aus hochfestem Stahl gehalten und fixiert

Damit erschließt sich für diesen einfach aufgebauten permanenterregte Synchronmotor ein breites Einsatzspektrum, das den Bereich des Servomotoren, vor allem aber auch andere einfache Motoranwendungen umfassen.

## Patentansprüche

1. Elektrische Maschine mit einem Stator (1), der ein in Nuten angeordnetes Wicklungssystem aufweist, wobei zwischen den Nuten Zähne (2) angeordnet sind, und zumindest ein Teil dieser Zähne (2) von jeweils einer Zahnspule (9) umgeben ist, wobei die Zähne (2) durch einen Jochrücken (3) miteinander zur Führung des magnetischen Flusses verbunden sind, einen Rotor (14), insbesondere in der Statorbohrung (12) angeordnet, der über einen Luftspalt (11) zwischen Stator (1) und Rotor (14) mit dem Stator (1) elektromagnetisch wechselwirkt, so dass sich eine Rotationsbewegung einstellt, wobei jede Zahnspule (9) einen Spulenkörper (4) umgibt, der einen den Zahn (2) umfassenden Schaft (5) und zwei flanschähnliche Deckel (6,7) aufweist, wobei ein Deckel (6) dem Jochrücken (3) und der andere Deckel (7) dem Luftspalt (11) zugewandt ist, wobei die flanschähnlichen Deckel (6,7) flexibel ausgeführt sind, derart, dass sie an die Statorbohrung (12)und/oder den Jochrücken (3) anpassbar sind.

2. Elektrische Maschine nach Anspruch 1, **dadurch gekennzeichnet , dass** der Spulenkörper (4) zumindest zweiteilig ausgeführt ist.

3. Elektrische Maschine nach Anspruch 2, **dadurch gekennzeichnet , dass** sich die beiden Teile des Spulenkörpers im Bereich ihres Schaftes (5) zusammensteckbar sind.

4. Elektrische Maschine nach einem der vorhergehenden Ansprüche, **dadurch gekennzeichnet , dass** die Flexibilität der flanschähnlichen Deckel (6,7) durch im wesentlich axial verlaufende Ausnehmungen in den Deckeln erreicht wird.

5. Verfahren zur Herstellung einer elektrischen Maschine nach Anspruch 1, **gekennzeichnet durch** folgende Schritte:
- Stanzpaketieren von Stator (1) und Rotor (14),
- insbesondere lagengerechtes Bewickeln eines Spulenkörpers (4) **durch** geeignete Bewicklungsvorrichtungen, insbesondere Flyer, in dem zumindest ein flanschähnlicher Deckel (6,7) aus dem Wickelraum gebogen wird und **dadurch** die Zugänglichkeit gewährleistet ist,
- Einsetzen des bewickelten Spulenkörpers (4) in den Stator (1), so dass der Spulenkörper (4) jeweils einen Zahn (2) umgibt und Anpassen der flanschähnlichen Deckel (6,7) an den Verlauf des Jochrückens (3) und den Verlauf der Statorbohrung (12).

6. Verfahren zur Herstellung einer elektrischen Maschine nach Anspruch 1, **gekennzeichnet durch** folgende Schritte:
- Stanzpaketieren von Stator (1) und Rotor,
- Bewickeln eines Teils eines zweiteiligen Spulenkörpers,
- nach dem Bewickeln des einen Teils des Spulenkörpers (4) wird der zweite Teil mit seinem flanschähnlicher Deckel (6,7) auf den bereits bewickelten Teil des Spulenkörpers gesetzt,
- Einsetzen des bewickelten zusammengesetzten Spulenkörpers in den Stator (1) und Anpassen der flanschähnlichen Deckel (6,7) an den Verlauf des Jochrückens (3) und den Verlauf der Statorbohrung (12).
